# EUROPEAN PATENT APPLICATION

(11) **EP 1 777 028 A1**
(43) Date of publication of application: **25.04.2007**
(21) Application number: 05751460.6
(22) Date of filing: 06.06.2005
(51) Int. Cl.: B23K 9/12, B23P 19/00, B25J 13/06

(54) **CONTROL DEVICE**

(30) Priority: 16.06.2004 JP 2004177675
(71) Applicant: Kan Mechanical Industry, Inc., Matsuyama-shi Ehime 791-8042 (JP)
(72) Inventor: KAN, Eiji, - (JP)
(74) Representative: Axelsson, Nils Ake A.L.
(86) International application number: PCT/JP2005/010354
(87) International publication number: WO 2005/123319

(57) **Abstract**

A control system (6) capable of controlling a work machine like a workpiece attitude changing device (5), by the welding torch of a welding robot. The system includes detecting members (33) capable of detecting the welding torch at plural locations in a casing (31); a plurality of air supply tubes (37) with one end connected to an air source (34) and the other end having an air supply aperture for supplying operating air to the work machine; electromagnetic opening and closing valves (38) located at an intermediate position in each air supply tubes; a control circuit unit (39) inputting detection signals from the detection members and outputting control signals to prescribed electromagnetic opening and closing valves; the detecting members respectively composed of a plurality of optical sensors capable of detecting the welding torch at two locations; and the control circuit unit outputting a prescribed control signal when detection signals are obtained simultaneously from the respective optical sensors.

## Description

### TECHNICAL FIELD

The present invention relates to a control system capable of controlling, by means of pneumatic pressure, a work machine for changing the attitude of an object to be welded or the like, during welding by an automatic assembly device such as a welding robot.

### BACKGROUND ART

In general, in an automatic assembly device, such as an automatic welding device, the workpiece, namely, the object to be welded, is held by a holding device and welding is carried out automatically at prescribed locations, by means of a welding robot. In this welding operation, if it is necessary to perform welding at prescribed locations about the perimeter of the workpiece, for example, then a rotating table holding the workpiece, provided on the holding device side, rotates through a prescribed angle, in such a manner that the welding locations are always positioned on the upper side so that a downward-facing welding operation can be carried out, for example.

The holding device of this kind is operated in conjunction with the welding robot, and more specifically, control data for the rotating table on the holding device side is input to the operating program for the welding robot. Consequently, the welding robot and the holding device are mutually connected by means of a plurality of control wires.

Therefore, it is necessary to lay a plurality of control wires between the welding robot and the holding device, although a workpiece holding device which makes this troublesome laying work unnecessary has been proposed.

This workpiece holding device uses an electric motor which rotates a workpiece holding body and a casing provided with a plurality of holes through which the welding torch of a welding robot can be inserted, and optical sensors which are capable of detecting the welding torch are provided inside each of the holes. When a prescribed optical sensor is actuated due to the welding torch being inserted into a particular hole, then the electric motor is controlled in such a manner that the workpiece holding body is rotated through a prescribed angle (see, for example, Japanese Patent Laid-open No. 2000-288786).

### DISCLOSURE OF THE INVENTION

According to the composition described above, the workpiece holding body is rotated to a prescribed angle in accordance with the position of the hole into which the welding torch is inserted, but since optical sensors are used in order to detect the welding torch, there is a risk that incorrect operation may occur because spatter which flies inside the holes during welding could be detected mistakenly as a welding torch. Furthermore, since the rotating table driven by the electric motor needs to be controlled, the control mechanism becomes complicated and costs increase.

Therefore, it is an object of the present invention to provide a control system in which incorrect operation due to spattering arising in the course of welding is prevented, and furthermore, in which the control mechanism can be simplified.

The control system according to the present invention is a control system in which an operating member of an automatic assembly device is capable of controlling another work machine, wherein detecting members capable of detecting the operating member are provided at a plurality of locations on the main body of the device; a plurality of air supply tubes are provided, with one end thereof being connected to an air source and the other end thereof supplying operating air to the other work machine; electromagnetic opening and closing valves are provided respectively at an intermediate position in the air supply tubes; a control unit is provided for inputting detection signals from the detecting members and outputting control signals to the electromagnetic opening and closing valves provided in the air supply tubes; the detecting members are respectively constituted by a plurality of non-contact type detectors capable of detecting the operating member in at least two different locations; and the control unit outputs a prescribed control signal only when detection signals from the respective detectors of the detecting member are obtained simultaneously.

Furthermore, the time period during which detection signals are obtained simultaneously from the respective detectors of the detecting member is at least 0.5 seconds.

Moreover, the control unit comprises a time period setting unit capable of setting the time period during which the detection signals for outputting a control signal are obtained simultaneously.

Furthermore, the time period set by the time period setting unit is at least 0.5 seconds.

Moreover, the detectors in the respective detecting members are disposed inside hole sections.

Furthermore, optical sensors are used as the detectors.

According to the configuration of the control system described above, it is possible to operate a work machine via detecting members provided on the main body of the control system, in accordance with the operating member, and it is possible to prevent spatter that arises during welding from being detected mistakenly as the operating member. Moreover, since the work machine is operated by means of operating air, when a pneumatic pressure cylinder is used, for example, the position can be registered (controlled) at the ends of the stroke of the piston forming the drive member of the cylinder. Therefore, the composition of the control unit can be simplified and consequently costs can be reduced, as compared with the case where the angle of rotation is controlled by an electric motor or the like.

### BRIEF DESCRIPTION OF THE DRAWINGS

Fig. 1 is a perspective view schematically showing a general composition of a welding robot and a workpiece attitude changing device, and a control system for same, according to an embodiment of the present invention;
Fig. 2 is horizontal cross-sectional view showing the structure of a holding table of the workpiece attitude changing device;
Fig. 3 is a block diagram showing the general composition of the control system;
Fig. 4 is a partially cutaway side view showing the general composition of a safety device in the control system; and
Fig. 5 is a perspective view showing the composition of a detecting member in the control system.

### BEST MODE FOR CARRYING OUT THE INVENTION

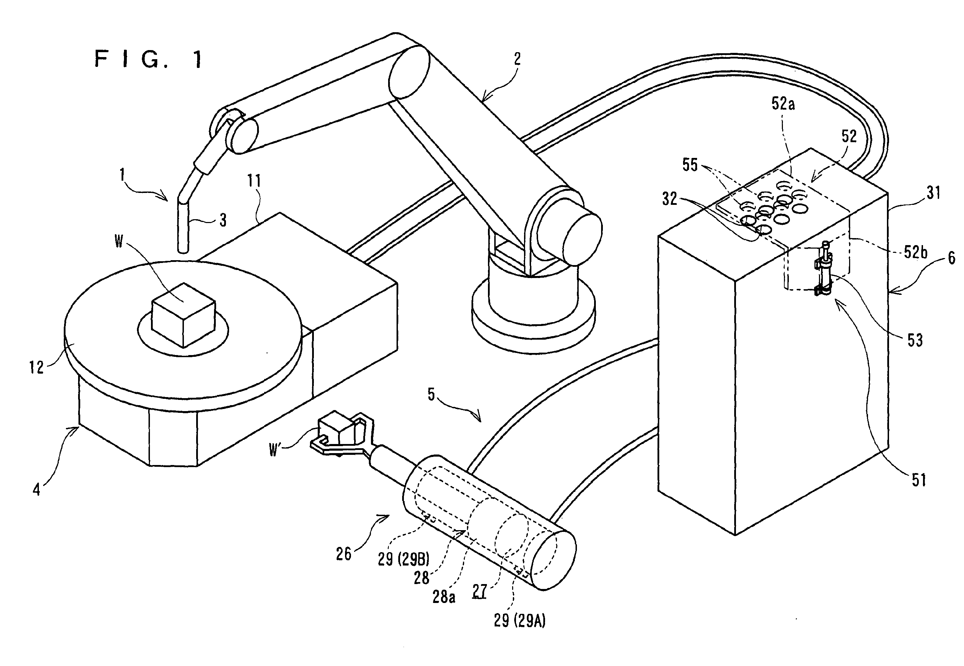

Below, a control system according to an embodiment of the present invention is described in detail with reference to Fig. 1 to Fig. 5.

The description in this embodiment relates to a control system which controls an attitude changing device capable of changing the attitude of a workpiece, which is an object to be welded by a welding robot, which is one example of an automatic assembly device.

As shown in Fig. 1, the welding robot 1 has, for example, a multi-jointed robot arm 2, and a welding torch (one example of an operating member) 3 is attached to the front end of the robot arm 2. At a position corresponding to the welding robot 1, there are provided: an attitude changing device (one example of a work machine) 4 which holds the workpiece W that is to be welded as well as changing the attitude thereof; an article attachment device (one example of a work machine) 5 in which another component W' is set; and a control system 6 for controlling the aforementioned attitude changing device 4 and article attachment device 5 by the welding torch 3 of the welding robot 1.

The attitude changing device 4 comprises a rotational actuator 11 having a rotating shaft section which is driven in rotation by pneumatic pressure, and a holding table 12 for holding a workpiece W, provided on the rotating shaft section of the rotational actuator 11.

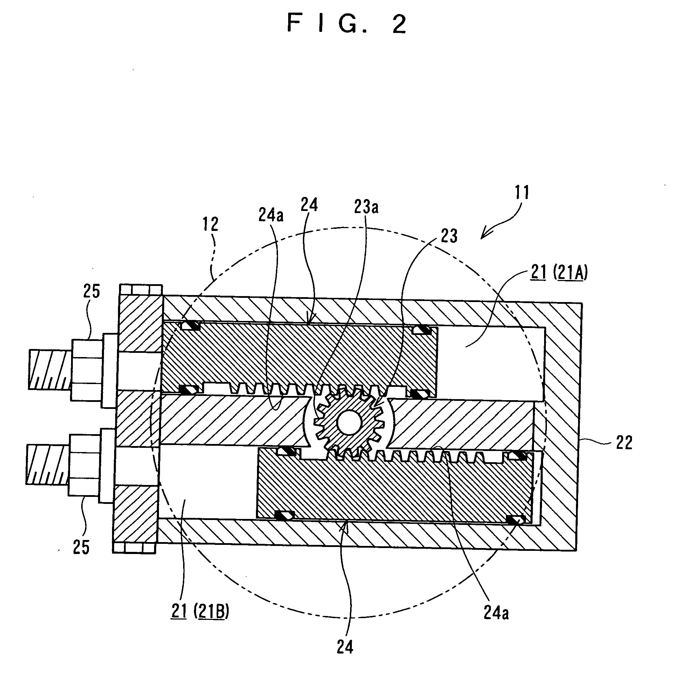

As shown in Fig. 2, the rotational actuator 11 comprises: a casing 22 in which two air cylinder chambers 21 (21A and 21B) extending in a prescribed direction are formed mutually in parallel; a rotational output shaft (rotational shaft section) 23, provided rotatably via a bearing between the two cylinder chambers 21 at an intermediate position in the lengthwise direction thereof (stroke) and having pinion teeth 23a formed on the peripheral surface thereof; and a pair of pistons 24, disposed movably in the lengthwise direction inside the respective cylinder chambers 21 and formed with rack teeth 24a which intermesh with the pinion teeth 23a of the rotational output shaft 23. Air inlet/outlets 25 are formed in the casing 22 in positions corresponding to one end of the respective cylinder chambers 21, and a holding table 12 is fixed to the upper end sections of the rotational output shaft 23.

Therefore, by moving the two pistons 24 in mutually opposite directions by supplying or expelling air (pressurized air) via the respective air inlet/outlets 25, it is possible to cause the rotational output shaft 23, in other words, the holding table 12, to rotate in a forward or reverse direction.

As shown in Fig. 1, a standard single-rod type pneumatic pressure cylinder 26 is used as the aforementioned article attachment device 5, and serves to register a component W' in position with respect to the workpiece W, by moving the component W', when attaching the component W' onto the workpiece W, for instance. Furthermore, first and second position detectors (for example, magnetic sensors) 29 (29A and 29B) for detecting that the piston section 28a of the piston rod 28 is positioned at the end of the stroke are provided inside the cylinder chamber 27 of the pneumatic pressure cylinder 26.

The rotational actuator 11 and the pneumatic pressure cylinder 26 are operated by means of air pressure, and therefore, the respective pistons (drive members) are registered in position (controlled) at the respective stroke end positions. Consequently, the composition of the control unit can be simplified in comparison with a case where the angle of rotation achieved by an electric motor, or the like, is controlled.

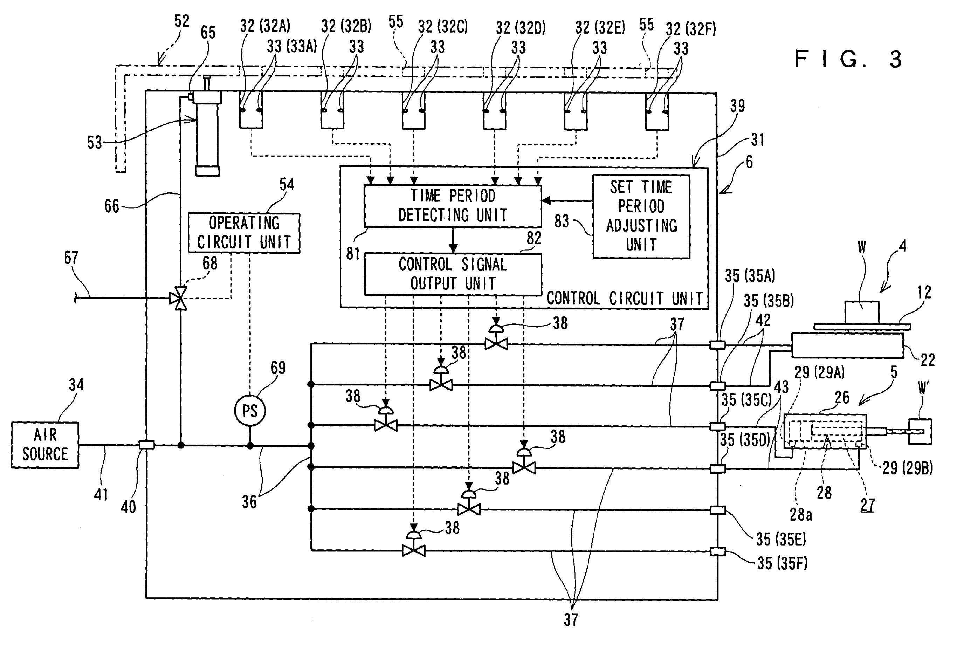

Furthermore, as shown in Fig. 1 and Fig. 3, the control system 6 comprises: a plurality of detecting members 33 disposed respectively inside hole sections 32 (32A to 32F) formed at a plurality of locations, for example, six locations, in the upper part of a vertically-oriented box-shaped casing 31 forming the main body of the device, (the detecting members being provided in the same number as the hole sections); a plurality of (for example, six) air supply tubes 37 (being one example of an air supply conduit), provided inside the casing 31, one end of each air supply tube being connected to a joining tube section 36 connected to an air source (for example, an air compressor) 34, and the other ends thereof being connected to air supply apertures (more specifically, couplings, or the like) 35 provided in a plurality of (for example, six) locations on the outer surface of the casing 31; electromagnetic opening and closing valves 38 provided at an intermediate point of each of the air supply tubes 37; and a control circuit unit (one example of a control unit) 39 for inputting detection signals from the detecting members 33 and outputting an opening or closing signal (a prescribed control signal, also called an operating signal) to the electromagnetic opening and closing valves 38. The other end of the joining tube section 36 is connected to a connection aperture 40, such as a coupling, and the air source 34 is connected to the connection aperture 40 via an air connection tube 41.

The respective air supply apertures 35 (35A to 35F) are connected to the respective work machines, in sets of two, for example, and in the present embodiment, they are connected respectively via air connection tubes 42 and 43, to the two air inlet/outlets 25 of the rotational actuator 11 of the attitude changing device 4, and the pneumatic pressure cylinder 26 of the article attachment device 5. Of course, it is also possible to connect another pneumatic pressure-type work machine to the remaining set of air supply apertures 35 (35E and 35F).

Moreover, the control system 6 is provided with a safety device 51 in order to halt the welding work by the welding robot 1, if the air pressure supplied from a connection aperture 40 (or an air supply aperture 35) falls for some reason or other, or if a problem such as a breakdown occurs in any one of the work machines, such as the article attachment device 5, and the device halts during operation, or if the power supply in the control system 6 is interrupted.

As shown in Fig. 1, Fig. 3 and Fig. 4, this safety device 51 comprises: a raising and lowering body 52 having an inverted L-shaped cross-section in which the vertical section 52b is disposed in line with the side face of the casing 31 in such a manner that the horizontal section 52a is able to rise and fall at a position on the upper surface of the casing 31; a raising and lowering device, such as a pneumatic raising and lowering cylinder 53, which raises and lowers the raising and lowering body 52 through a prescribed height; and an operating circuit section 54 which operates the pneumatic pressure cylinder 53. Furthermore, hole sections 55 having the same diameter and the same position as the hole sections 32 formed in the casing 31 are formed in the horizontal section 52a of the raising and lowering body 52.

A single-rod type cylinder with an in-built spring, for example, is used as the pneumatic pressure cylinder 53, and when the rod section of the piston rod of the cylinder is caused to project and raises up the raising and lowering body 52, the horizontal movement of the welding torch 3 is impeded by the hole section 55, and hence a safety switch provided in the welding robot 1 (for example, a switch using a sensor capable of detecting the occurrence of vibrations in the welding torch) is activated and the welding robot 1 is halted. The amount by which the raising and lowering body 52 is raised is greater than the path of movement of the front end of the welding torch 3, and therefore, the welding torch 3 always abuts against the side of the raising and lowering body 52 if it is shifted to the next operation while the raising and lowering body 52 is raised.

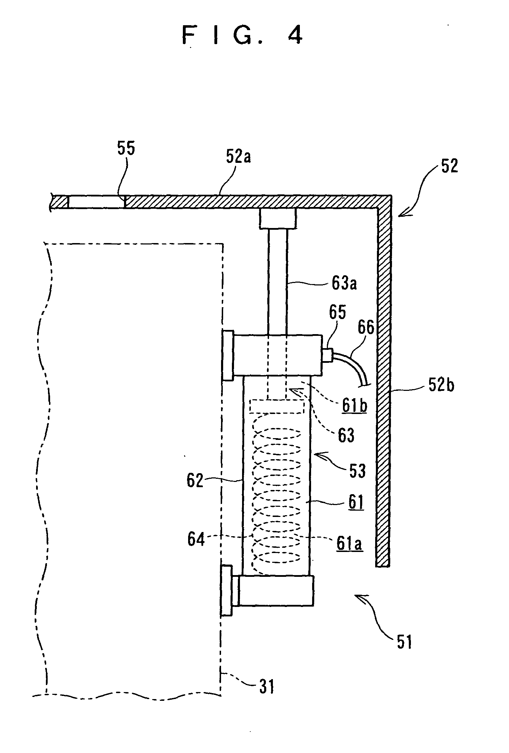

As shown in Fig. 4, the pneumatic pressure cylinder 53 comprises a tubular cylinder main body 62 having a cylinder chamber 61; a piston rod 63, disposed inside the cylinder chamber 61, of which the rod section 63a projects externally; and a spring body 64, disposed inside the piston side portion 61a of the cylinder chamber 61, for impelling the piston rod 63 towards the exterior (a coil spring is used for the spring body 64, and when the pneumatic pressure is released, for example, then the piston rod is caused to project by the force of the spring). Furthermore, the air supply aperture 65 of the rod side region 61b of the cylinder chamber 61 is connected via an air introduction tube 66 to an intermediate portion of the joining tube section 36.

Therefore, in a state where air is supplied normally from the air source 34, pneumatic pressure is supplied to the interior of the rod side cylinder chamber 61b and the piston rod 63 is drawn in against the resistance of the spring body 64, but if there ceases to be pneumatic pressure from the air source 34, then the force of the spring causes the rod section 63a of the piston rod 63 to project, thereby lifting the raising and lowering body 52. If the robot arm 2 of the welding robot 1 is moved in this state, then the welding torch 3 makes contact with (abuts against) the perimeter edge of the hole section 55 of the raising and lowering body 52, and therefore the safety device in the welding robot 1 activates and the robot halts.

Next, the operating circuit unit 54 will be described.

This operating circuit unit 54 serves to actuate the safety device 51 in cases where a problem has occurred in a work machine, such as the article attachment device 5, or where the air pressure has fallen or the power supply to the control system 6 has been interrupted, and it activates the safety device 51 on the basis of a signal from first and second position detectors 29A and 29B which detect the end of the stroke of the piston rod 28 provided in the pneumatic pressure cylinder 26, or by detecting a fall in the pneumatic pressure, or an interruption in the power supply.

Therefore, an open tube 67 for allowing the air to escape into the atmosphere is provided at an intermediate position of the air introduction pipe 66, and furthermore, an electromagnetically actuated three-way switching valve 68 is provided in the connection section of the open tube 67. Moreover, the three-way switching valve 68 supplies pneumatic pressure to the pneumatic pressure cylinder 26 when power is supplied to the control system 6, but as described above, if a problem occurs in the work machine, for example, or if the pneumatic pressure falls, or if there is a power cut which causes an interruption in the power supply, then the pneumatic pressure cylinder 26 connects to the open pipe 67.

In the electrical control circuit (not illustrated) for controlling the three-way switching valve 68, if the piston rod 28 of the pneumatic pressure cylinder 26 is halted during operation, then the detection signals from the two position detectors 29A and 29B are interrupted for a prescribed time period or longer, and when this situation is detected, the safety device 51 is operated.

More specifically, if the time period during which a detection signal from the position detectors 29A and 29B has not been detected has exceeded a set time period according to a timer, then the three-way switching valve 68 is connected to the open tube 67 (in other words, the command to the three-way switching valve is removed), and the pneumatic pressure is released from the raising and lowering pneumatic pressure cylinder 53.

Furthermore, in the electrical control circuit, if a detection signal is input from the pressure switch 69 provided at an intermediate point of the joining tube section 36 (which is set to output a detection signal if the pressure becomes equal to or less than 0.3 MPa, for example), and if a power supply is no longer being supplied to the control system 6, then the command to the three-way switching valve 68 is removed and the pneumatic pressure cylinder 26 connects automatically to the open tube 67 and the pneumatic pressure falls to atmospheric pressure.

Consequently, if a problem has occurred in a work machine or in the air delivery tube system, or if there has been a power interruption due to a fault in the electrical system, then the safety device 51 activates and the operation of the welding robot 1 is halted.

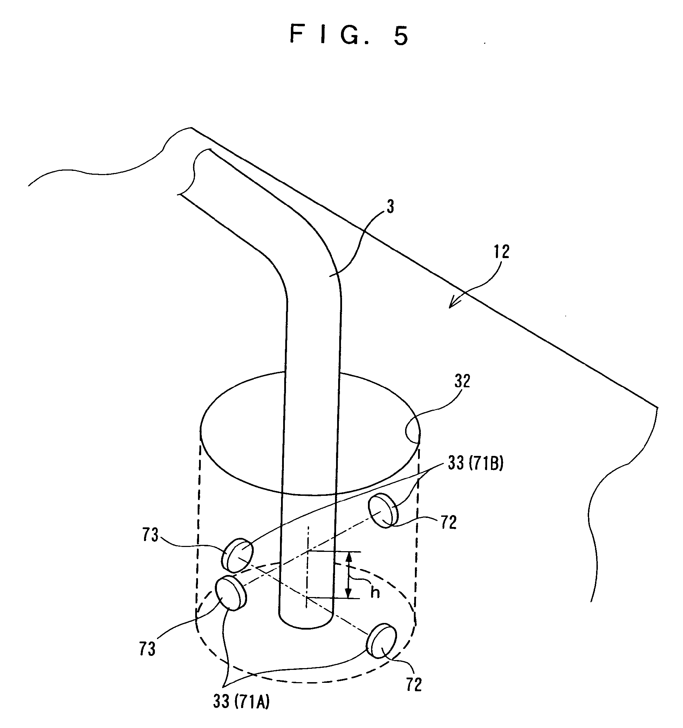

Furthermore, as shown in Fig. 5 (in which the raising and lowering body is not illustrated), the respective detecting members 33 comprise two sets (or three or more sets) of optical sensors (one example of a detector) 71A and 71B disposed in positions mutually separated by a prescribed height h in the axial direction of the hole section 32 (for example, positions mutually separated by approximately several centimeters). Of course, the optical sensors 71A and 71B respectively have a light emitting unit 72 and a light receiving unit 73 provided on the inner wall faces of the hole sections 32.

Moreover, the set time period can be adjusted in such a manner that a confirmation signal can be obtained which confirms that the welding torch has been detected, if the time period during which the welding torch 3 is detected simultaneously by the two respective optical sensors 71A and 71B in a detecting member 33, in other words, the time period during which the detection signals from the two optical sensors 71A and 71B are mutually overlapping, is equal to a prescribed set time period (for example, approximately 0.5 seconds to several seconds).

More specifically, the control system 6 comprises: a time period detection unit 81 which inputs the detection signals detected by the optical sensors 71A and 71B in the respective detecting members 33, determines whether or not the time period during which both detection signals are detected is equal to or greater than a prescribed set time period, and outputs a confirmation signal indicating that the welding torch is present, if this time period is equal to or exceeding the set time period; and a control signal output unit 82 which inputs this confirmation signal and outputs an operating signal (a prescribed control signal) indicating an angle corresponding to the detecting member 33 relating to that confirmation signal, to the electromagnetic opening and closing valve 38 which operates the rotational actuator 11. Furthermore, it also comprises a set time period adjusting unit (or time period setting unit) 83 which is able to adjust, externally, the set time period during which the detection signals are detected simultaneously by the time period detecting unit 81 described above. The time period detecting unit 81 judges which of the detecting members 33 has supplied the detection signals.

Stated in general terms, the control system 6 has a function of changing (controlling) the attitude of the workpiece W held by the holding table 12 by outputting a rotational operating signal to the rotational actuator 11 in accordance with the detection signals from the detection members 33, and furthermore, it also has a function of controlling the pneumatic pressure cylinder 26 of the article attachment device 5.

In the foregoing composition, if the attitude of the workpiece W is to be changed when carrying out a prescribed welding task with respect to a workpiece W situated on a holding table 12, for example, then the welding torch 3 of the welding robot 1 is inserted into the hole section 32 (32A) where the first detecting member 33A, which issues the command to change the attitude in a prescribed direction, is located.

Upon so doing, a detection signal for the welding torch 3 is input to the control circuit unit 39 from the two optical sensors 71A and 71B of the first detecting member 33A disposed inside the hole section 32A.

In the control circuit unit 39, the detection signals from the two optical sensors 71A and 71B are input to the time period detection unit 81, which only outputs a confirmation signal indicating that the welding torch 3 is present, to the control signal output unit 82, if both of the detection signals are detected simultaneously for a set time period or longer. Thereupon, the control signal output unit 82 outputs a signal corresponding to the position of the detecting member 33 in question, in other words, an operating signal (prescribed control signal) which causes the holding table 12 to rotate through a prescribed angle, to the rotational actuator 11.

If spatter flies into the hole section 32 and it happens to be detected by the two optical sensors 71A and 71B as it passes through the center of the hole section 32, then since the two optical sensors 71A and 71B are separated from each other, the detection signals from the two optical sensors 71A and 71B will not be detected simultaneously. Therefore, a confirmation signal is not output from the time period detection unit 81 of the control circuit unit 39, and consequently, there is no risk of incorrect operation due to spattering.

In this way, by simply introducing the welding torch 3 into a hole section 32 formed in a casing 31, the attitude of the workpiece W is changed automatically, via the detecting members 33. More specifically, when it becomes necessary to change the attitude of the workpiece W, an instruction to that effect can be supplied to the attitude changing device 4 or the article attachment device 5, in accordance with the operational tasks carried out by the welding robot, and furthermore, it is possible to prevent spattering generated during welding from being detected mistakenly as the welding torch 3.

Furthermore, the rotational actuator 11 and the pneumatic pressure cylinder 26 described above are operated by air pressure (an operating pneumatic pressure), and therefore they are registered in position (controlled) at the respective stoke ends of the piston, which means that the composition of the control unit can be simplified, and costs can be reduced, in comparison with a case where the angle of rotation achieved by an electric motor, or the like, must be controlled.

Moreover, since a safety device 51 is provided, then even if there is a problem in the control system 6, the welding work (operational task) performed by the welding robot 1 is halted, and therefore work safety can be ensured.

In order to achieve a more reliable confirmation that the welding torch 3 is present by means of the detecting members 33, the set time period adjusting unit 83 of the control system 6 should set the time period during which the detection signals are simultaneously detected, to a long period.

In the embodiment described above, an optical sensor is used as a detecting member for detecting a welding torch, but it is also possible to use a proximity sensor, or the like, for example, and besides locating the sensors in the hole sections, it is also possible to locate detecting members respectively at appropriate positions inside a box-shaped container, without forming hole sections and without providing partitions.

Furthermore, the embodiment described above related to such a case that is applicable to welding work by a welding robot, but the present invention may of course be applied to other assembly tasks, apart from welding.

Moreover, the embodiment described above related to such a case where six detecting members are provided, but it is possible to increase or reduce the number of detecting members, appropriately, in accordance with the increase or decrease in the number of tasks performed with respect to the workpiece, for example.

Furthermore, the embodiment described above related to such a case where the rotational axis of the holding table is disposed in the vertical direction, but the rotational axis is not limited to being vertical, and it may also be disposed at an oblique angle with respect to the vertical plane, or naturally, in a horizontal direction, depending on the attitude during welding.

### INDUSTRIAL APPLICABILITY

The control system according to the present invention is valuable for controlling a workpiece attitude changing device by a welding torch in a welding robot device; and furthermore, it is also valuable for controlling a work machine, when changing the attitude of a component, or moving a component, by means of a work arm in an article assembly robot device.

## Claims

1. A control system comprising an automatic assembly device having an operating member capable of controlling another work machine, comprising:
detecting members capable of detecting the operating member and provided at a plurality of locations on a main body of said system;
a plurality of air supply tubes, each having one end connected to an air source and the other end supplying operating air to said another work machine;
electromagnetic opening and closing valves provided respectively at an intermediate position in the air supply tubes;
a control unit for inputting detection signals from the detecting members and outputting control signals to the electromagnetic opening and closing valves provided in the air supply tubes, wherein
the detecting members are respectively comprises a plurality of non-contact type detectors capable of detecting the operating member in at least two different locations, and
the control unit outputs a prescribed control signal only when detection signals from the respective detectors of the detecting member are obtained simultaneously.

2. The control system according to claim 1, wherein the time period during which detection signals are obtained simultaneously from the respective detectors of the detecting member is at least 0.5 seconds.

3. The control system according to claim 1, wherein the control unit comprises a time period setting unit capable of setting the time period during which the detection signals for outputting a control signal are obtained simultaneously.

4. The control system according to claim 3, wherein the time period set by the time period setting unit is at least 0.5 seconds.

5. The control system according to claim 1, wherein the detectors in the respective detecting members are disposed inside hole sections.

6. The control system according to claim 1, wherein optical sensors are used as the detectors.
